# EUROPÄISCHE PATENTANMELDUNG

(11) **EP 2 091 011 A1**
(43) Veröffentlichungstag der Anmeldung: **19.08.2009**
(21) Anmeldenummer: 09000477.1
(22) Anmeldetag: 15.01.2009
(51) Int. Cl.: G06Q 10/00

(54) **Verfahren zur Optimierung des Gewinnes von Bioenergie, Marktfrüchten und Produkten der Bioraffinerie in der Landwirtschaft**

(30) Priorität: 16.01.2008 DE 102008004710
(71) Anmelder: Schütze, Harald, 01623 Lommatzsch (DE)
(72) Erfinder: Schütze, Harald, 01623 Lommatzsch (DE)
(74) Vertreter: Dinter, Tilo

(57) **Zusammenfassung**

Die Erfindung betrifft ein Verfahren zur Optimierung der voneinander abhängigen Erträge von Biomasse als Energieträger für die Verwendung in Biokraftwerken, der bedarfsgerechten Erträge an Marktfrüchten und Futtermitteln sowie der Biomasse als Grundstoff für die Herstellung von Produkten der Pharmazie, der Kosmetik und der technischen Chemie. Aufgabe der Erfindung ist es, ein Verfahren zur Erfassung und Steuerung der Ertragsabläufe zu schaffen, mit dem die Einflussgrößen auf die Herstellung von Biomasse unter Berücksichtigung des Bedarfes an Bioenergie, an Marktfrüchten und Produkten der Bioraffineric optimal gesteuert werden und dabei witterungsbedingte Einflüsse und Aufwände für die logistischen Abläufe in die Steuervorgänge einbezogen werden. Gelöst wird die Aufgabe dadurch, dass die Bedarfswerte an Bioenergie (5), Marktfrüchten (4) und Produkten der Bioraffineric (6) erfasst werden, die auf das die Erträge regelnde System einwirkenden witterungsbedingten und logistischen Einflussgrößen messtechnisch ermittelt werden, in einer Steuer- und Auswertungsbaugruppe (1) ausgewertet und zwecks Erreichung eines optimalen Ertrages Steuersignale zur Steuerung von die Regelgrößen beeinflussenden Baugruppen erzeugt werden sowie Änderungen und Auswirkungen der einzelnen Einflussgrößen auf die übrigen Einflussgrößen gespeichert und/oder angezeigt und/oder signalisiert werden.

## Beschreibung

Die Erfindung betrifft ein Verfahren zur Optimierung der voneinander abhängigen Erträge von Biomasse als Energieträger für die Verwendung in Biokraftwerken, der bedarfsgerechten Erträge an Marktfrüchten und Futtermitteln sowie der Biomasse als Grundstoff für die Herstellung von Produkten der Pharmazie, der Kosmetik und der technischen Chemie. Die Abhängigkeit der zur Erzeugung von Energie dienenden Biomasse vom bedarfsgerechten Ertrag an Marktfrüchten und Produkten der Bioraffinerie ist durch die auf die vorhandene Bodenfläche bezogenen Erträge bedingt.
Bei den bekannten Verfahren wird die Herstellung von Biomasse für Biokraftwerke losgelöst von dem vorhandenen bzw. vorgegebenen Bedarf an Marktfrüchten für die nahrungswirtschaftliche Verwertung vorgenommen. Witterungsbedingte Einflussgrößen wie beispielsweise Niederschläge, starke Temperatursehwankungen sowie Überschwemmungen und die damit verbundenen Änderungen des Gleichgewichtes beim Ertrag von Biomasse und Marktfrüchten werden nicht hinreichend in den Ertragsprozess einbezogen. Ebenso findet keine Einbeziehung von aus der Biomasse herstellbaren Produkten der Bioraffinerie statt. So wird beispielsweise bei der Vorrichtung zur Erzeugung elektrischer Energie aus nachwachsenden Rohstoffen nach der DE 200 04 632 U1 der Energiegewinnungsvorgang mittels nichtfossiler fester Brennstoffe ohne Berücksichtigung des Bedarfes an Marktfrüchten und Futtermitteln durchgeführt. Wetterbedingte Einflüsse finden bei der Steuerung des Herstellungsprozesses ebenfalls keine Berücksichtigung.
Die Aufgabe der Erfindung besteht deshalb in der Schaffung eines Verfahrens zur Erfassung und Steuerung der Ertragsabläufe, mit dem die Einflussgrößen auf die Herstellung von Biomasse unter Berücksichtigung des Bedarfes an Bioenergie, an Marktfrüchten und Produkten der Bioraffinerie optimal gesteuert werden und dabei witterungsbedingte Einflüsse und Aufwände für die logistischen Abläufe in die Steuervorgänge einbezogen werden. Gelöst wird diese Aufgabe durch die beschreibenden Merkmale des Patentanspruches 1. Vorteilhafte Weiterbildungen des Verfahrens werden mit den beschreibenden Merkmalen der Patentansprüche 2 bis 6 wiedergegeben.
Bei der Anwendung des Verfahrens findet der aktuelle Bedarf an Marktfrüchten und Futtermitteln wie auch der dezentrale Ertragsbedarf an Biomasse für die Erzeugung von Elektro- bzw. Wärmeenergie Beachtung. Die mit der Anwendung des Verfahrens verbundene optimale Ausnutzung des möglichen Ertragsvolumens der dezentral vorgegebenen Anbaufläche dient einer umweltgerechten Energieerzeugung, der Einbeziehung des Bedarfes an Marktfrüchten und Futtermitteln bei gleichzeitiger Beachtung witterungsbedingter Einflüsse.
Das Steuerungsverfahren liefert abrufbare aktuelle Daten, die zur Entschcidungsfindung für erforderliche Änderungen der Vorgaben und damit verbundener Steuergrößen dienen.

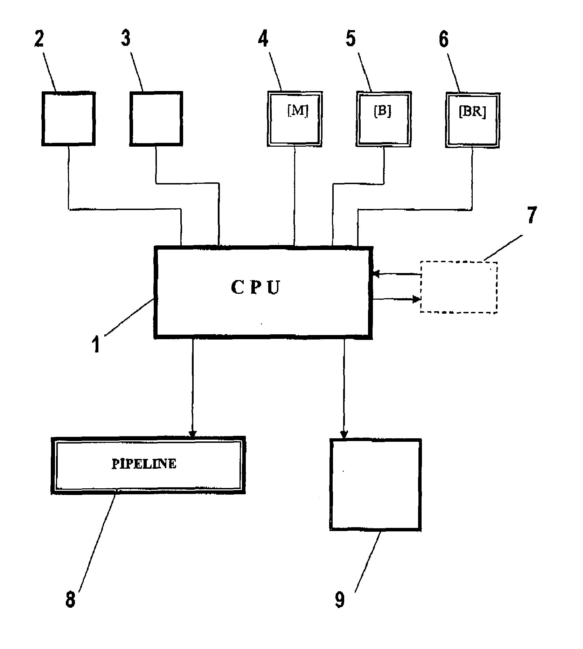

Nachfolgend soll das erfindungsgemäße Verfahren an Hand eines Ausfuhrungsbeispiels näher erläutert werden.
Mit der in der Zeichnung dargestellten einzigen Figur wird der schematische Ablauf des Auswerte- und Steucrverfahrens wiedergegeben.

Der Datenspeicher 2 speichert die wetterbedingten Daten der vorhandenen Anbaufläche. Dazu sind dem Datenspeicher 2 Messcinrichtungen zugeordnet, die auftretende Niederschläge, Temperaturwerte, Messwerte über die vorhandene Bodenfeuchtigkeit und auftretende Überschwemmungen des Gebietes regional, den Flächen des Anbaugebietes zugeordnet, erfassen, abspeichern und in digitale Signale umwandeln. Im Datenspeicher 3 sind überregionale, von meteorologischen Wetterstationen erfasste und statistisch aufbereitete, Wetterdaten abgespeichert. Diese Daten werden über online-Verbindungen ständig aktualisiert.
Die Datenspeicher 2 und 3 sind mit der Steuer- und Auswertungsbaugruppe 1 verbunden. In dieser Steuer- und Auswertungsbaugruppe 1 werden die den Wetterdaten entsprechenden Signale beider Datenspeicher 2, 3 verknüpft und ausgewertet. Durch softwaregestützte Interpolation werden die für das regionale Anbaugebiet zutreffenden voraussichtlichen tendenziellen Wetterentwicklungen ermittelt. Dazu werden die regionalen Daten vorangegangener Zeiträume mit denen der überregional statistisch ermittelten Daten verknüpft. Die Vorgabedaten für Marktfrüchte 4 bzw. Futtermittel erfolgt durch entsprechende Dateneingaben mittels Internetverbindung, einer mobilen Computereinrichtung oder einem mobilen Speicherbaustein. Der Bedarf an zu erzeugende Biomasse 5 ist von dem erforderlichen Energiebedarf abhängig. Ausgegangen wird dabei von einem in der Praxis hervorgegangenen Durchschnittswert des Erfordernisses einer Anbaufläche von 500 ha für ein Biokraftwerk mit einer Leistung von 1 MW. Schwankungen bei dem möglichen Anbauvolumen, bedingt durch Wetterschwankungen und einem unterschiedlichen Bedarf an Marktfrüchten bzw. Futtermitteln müssen durch entsprechende Biomassespeicher 6 ausgeglichen werden. Nach vorliegenden Werten beträgt der erforderliche Ausgleich für derartige Schwankungen ca. 20% des Ertrages. Unter Beachtung der maximalen Haltbarkeit der Biomasse kann die maximale Größe des Biomassespeichers nach ca 5 Jahren erreicht werden. Nach dieser Zeit ist die maximale Speicherkapazität erreicht. Dabei geht man von einer durchschnittlichen jährlichen Entnahme und Zufuhr von 20% des Speichervolumens aus. Die Erfassung der Füllstände und Steuerung der Zufuhr und Entnahme der Biomasse des Biomassespeichers erfolgt durch Steuerung mittels der Steuer- und Auswertungsbaugruppe 1. Diese Steuer- und Auswertungsbaugruppe 1 kann aus einer Computereinrichtung mit entsprechenden an sich bekannten Steuerbaugruppen bestehen. Schwankungen über einen vorgegebenen Toleranzbereich hinaus werden angezeigt bzw. signalisiert. Diese Daten dienen als Entscheidungsgrundlage für eine Veränderung der Bedarfsvorgaben an Marktfrüchten, anderweitige Energiezuschaltungen usw.

Neben der Erzeugung von Bioenergie sowie einer bedarfsgerechten Produktion von Marktfrüchten und Futtermitteln wird die erzeugte Biomasse auch zur Herstellung von pharmazeutischen Produkten, kosmetischen Artikeln und Erzeugnissen auf dem Gebiet der technischen Chemie genutzt. Die Bedarfsvorgabe durch entsprechende Bedarfsdaten 6 an erforderlicher Biomasse für diese Produkte erfolgt ebenfalls an die zentrale Steuer- und Auswertungsbaugruppc 1. Für die Minimierung des Herstellungsaufwandes durch Transport-, Energie- und Personalkosten wird der logistische Ablauf durch Anwendung an sich bekannter Optimierungssoftware auf der Grundlage der abgespeicherten Daten auf ein optimales Maß reduziert. Dazu werden die Daten der erforderliche Transportwege, die zu transportierenden Massen, erforderliche Lagerkapazitäten, erforderliche Transportmittel und Lagerungsstellen abgespeichert. Je nach Vorgabe der Bedarfsdaten wird die optimale Logistik, die erforderliche Lagerungstechnologie und der Einsatz des vorteilhaftesten Transportsystems ermittelt. Durch den Einsatz des Pipelinesystems 8 innerhalb des Optimierungssytems werden die Transportkosten für den Transport des erzeugten Biogases gesenkt. Im Hinblick auf das Gesamtsystem werden die Daten des Pipelinesystems 8 in die Logistik einbezogen und durch Steuersignale der Steuer- und Auswertungsbaugruppe 1 optimal gesteuert. Die Anzeige bzw. Signalisierung von Toleranzüberschreitungen, vorhandene freie Speicherkapazitäten, Ertragsentwicklungen, Ertragsprognosen, Veränderungen der Anbaufolgen sowie zeitliche Überschneidungen für optimale Fruchtfolgen beim Anbau wird durch die Anzeige- und Signalisierungsbaugruppe 7 vorgenommen.

### Bezugszeichen

- 1: Steuer- und Auswertebaugruppc
- 2: Datenspeicher
- 3: Datenspeicher
- 4: Vorgabedaten Marktfrüchte [M]
- 5: Bedarfsdaten Biomasse [B] - Bioenergie -
- 6: Bedarfsdaten Biomasse [BR] - Bioraffinerie -
- 7: Biomassespeicher
- 8: Pipelinesystem
- 9: Anzeige-/Signalisierungsbaugruppe

## Patentansprüche

1. Verfahren zur Optimierung des Gewinnes von Bioenergie, Marktfrüchten und Produkten aus dem Grundstoff Biomasse, **dadurch gekennzeichnet, dass** die voneinander abhängigen Bedarfswerte an Bioenergie, Marktfrüchten und Produkten der Bioraffinerie erfasst werden, die auf das die Erträge regelnde System einwirkenden witterungsbedingten und logistischen Einflussgrößen messtechnisch ermittelt, die in elektrische Signale umgewandelten Werte in einer Steuer- und Auswertungsbaugruppe (1) ausgewertet und zwecks Erreichung eines optimalen Ertrages Steuersignale zur Steuerung von die Regelgrößen beeinflussenden Baugruppen erzeugt werden sowie Änderungen und Auswirkungen der einzelnen Einflussgrößen auf die übrigen Einflussgrößen gespeichert und/oder angezeigt und/oder signalisiert werden.

2. Verfahren nach Patentanspruch 1, **dadurch gekennzeichnet, dass**
a) die Niederschlagsmengen und -arten, Bodenfeuchtigkeit sowie Temperaturwerte bezogen auf die genutzten regionalen Anbauflächen messtechnisch erfasst und die erfassten Messsignale der zentralen Steuer- und Auswertungsbaugruppe (1) zugeleitet werden und
b) diese Signale mit abgespeicherten, statistisch ermittelten Messwerten vorberliegender Zeiträume in der zentralen Steuer- und Auswertungsbaugruppe (1) verglichen und zu erwartenden wahrscheinlichen Niederschlagsentwicklungen für die regionalen Anbauflächen interpoliert, die Füllstände der Biomassespeicher (6) erfasst und entsprechende zur Steuerung der Zufuhr und/oder Entnahme der Biomasse und/oder Anzeige der Füllstände in den Biomassespcichem (6) dienende Steuersignale erzeugt werden.

3. Verfahren nach Patentanspruch 1, **dadurch gekennzeichnet, dass**
a) die Vorgabewerte für den Bedarf an Marktfrüchten elektronisch erfasst und die Signale der zentralen Steuer- und Auswertungsbaugruppe (1) zugeleitet werden und
b) die Signale softwaregestützt innerhalb der Steuer- und Auswertungsbaugruppe (1) hinsichtlich der Einwirkungen auf den Biomasseertrag, den optimalen Anbaufolgen und freier Speicherkapazitäten ausgewertet und Signale zur Anzeige und/oder Signalisierung erzeugt werden.

4. Verfahren nach Patentanspruch 1, **dadurch gekennzeichnet, dass** die in der zentralen Steuer- und Auswertungsbaugruppe (1) abgespeicherten Daten mittels einer mobilen Speicherbaugruppe und mittels einer in der mobilen Speicherbaugruppe abgespeicherten nutzerspezifischen Software abgerufen, abgespeichert und/oder über eine externe Wiedergabeeinrichtung angezeigt werden.

5. Verfahren nach den Patentansprüchen 1 und 4, **dadurch gekennzeichnet, dass** die abgespeicherten Daten mittels der zentralen Steuer- und Auswertebaugruppe (1) für die Bestimmung der optimalen Orte für eine Zwischenlagerung und Vorbehandlung der Ernteprodukte an den Flächenrändern der Ernteflächen ausgewertet werden.

6. Verfahren nach den Patentansprüchen 1 und 4, **dadurch gekennzeichnet, dass** die abgespeicherten Daten mittels der zentralen Steuer- und Auswertcbaugruppc (1) zur Bestimmung des logistischen Ablaufes des Transportes des Biogases durch ein Pipelinesystem (8) ausgewertet und in Signale zur Steuerung des Pipelinesystems (8) gewandelt werden.
